# EUROPEAN PATENT APPLICATION

(11) **EP 2 464 162 A1**
(43) Date of publication of application: **13.06.2012**
(21) Application number: 10811276.4
(22) Date of filing: 26.08.2010
(51) Int. Cl.: H04W 24/08

(54) **METHOD AND EQUIPMENT FOR TESTING PERFORMANCE OF WIRELESS NETWORK CELL**

(30) Priority: 28.08.2009 CN 200910171429
(71) Applicant: Huawei Technologies Co., Ltd., Guangdong 518129 (CN)
(72) Inventor: CHEN, Yu, Shenzhen Guangdong 518129 (CN); HUANG, Yinghua, Shenzhen Guangdong 518129 (CN)
(74) Representative: Thun, Clemens
(86) International application number: PCT/CN2010/076368
(87) International publication number: WO 2011/023116

(57) **Abstract**

The present invention provides a method and device for testing performance of a radio network cell. The method includes: obtaining traffic information of a cell and triggering a cell service performance test according to the traffic information of the cell; performing the cell service performance test and obtaining a cell performance parameter; and determining whether cell service performance is normal according to the cell performance parameter. According to the present invention, a radio performance parameter of the cell and processing procedure information in a procedure of a radio access request attempt are detected. This improves accuracy of analysis and determination of the cell service performance. In addition, a test is able to be performed without depending on a mobile terminal in an actual radio network, and test data is able to be obtained.

## Description

This application claims priority to Chinese Patent Application No. 200910171429.6, filed on August 28, 2009 and entitled "METHOD AND DEVICE FOR TESTING PERFORMANCE OF RADIO NETWORK CELL", which is incorporated herein by reference in its entirety.

### FIELD OF THE INVENTION

The present invention relates to the network communications field, and in particular, to a method and device for testing performance of a radio network cell.

### BACKGROUND OF THE INVENTION

When a radio base station encounters a software or hardware fault, services in a cell may be abnormal, that is, the cell cannot provide services or service performance deteriorates apparently, or a mobile communication terminal normally access the cell or it is difficult for the mobile communication terminal to normally access the cell. In the prior art, it is difficult for the base station to directly detect all possible system abnormalities by using an internal detection mechanism of the base station. Generally, in a case in which no software or hardware abnormality is directly detected in a base station system, actual traffic of the cell is checked by using a performance measurement mechanism. When a difference between the actual traffic in a period of time and expected traffic reaches a particular extent (or the actual traffic coincides with a particular characteristic), it may be determined that the cell is an abnormal cell. However, for a cell whose expected traffic is low, this manner takes a long time to detect a problem. In addition, in the case in which no software or hardware abnormality is directly detected in the base station system, some specified network elements or servers in a radio communication network automatically select some mobile terminals in the cell. The selected mobile terminals report specified performance parameters of the cell to determine whether the cell is an abnormal cell. This detection mechanism requires that a user (a mobile terminal) needs to exist in the cell. However, for the cell whose traffic is low, this premise may not be satisfied. Therefore, the conventional method for testing performance of a radio network cell cannot timely detect a software or hardware fault of the radio base station in the cell whose traffic is low.

### SUMMARY OF THE INVENTION

Embodiments of the present invention provide a method and device for testing performance of a radio network cell so that a cell that cannot provide services or a cell with apparent deterioration in service performance is able to be discovered in time.

An embodiment of the present invention provides a method for testing performance of a radio network cell, where the method includes:
obtaining traffic information of a cell and triggering a cell service performance test according to the traffic information of the cell;
performing the cell service performance test and obtaining a cell performance parameter; and
determining whether cell service performance is normal according to the cell performance parameter.

An embodiment of the present invention provides a device, where the device includes:
a cell traffic information obtaining module, configured to obtain traffic information of a cell and trigger, according to the traffic information of the cell, a cell service testing module to perform a cell service performance test;
the cell service testing module, configured to perform the cell service performance test and obtain a cell performance parameter; and
a cell service performance test controlling module, configured to determine whether cell service performance is normal according to the cell performance parameter obtained by the cell service testing module.

According to the embodiments of the present invention, when a radio access request attempt is initiated or not initiated, or when radio access is maintained, a radio quality parameter of the cell and processing procedure information that is recorded in a procedure of the radio access request attempt are able to be detected for analyzing the cell service performance. In this way, the cell service performance is analyzed based not only on performance measurement data of a base station. Therefore, the analysis and determination may be more accurate and do not depend on a mobile terminal in an actual radio network. That is, even in a cell where no user exists, the test may also be performed and test data may also be obtained.

### BRIEF DESCRIPTION OF THE DRAWINGS

The accompanying drawings described here facilitate further understanding of the present invention, and constitute a part of the application without limiting the present invention. Among the drawings:
FIG. 1A is a flowchart of a method for testing performance of a radio network cell according to a first embodiment of the present invention;
FIG. 1B is a flowchart of a first manner of a step of performing a cell service performance test and obtaining a cell performance parameter in a method for testing performance of a radio network cell according to the present invention;
FIG. 1C is a flowchart of a second manner of the step of performing a cell service performance test and obtaining a cell performance parameter in the method for testing performance of a radio network cell according to the present invention; and
FIG. 2A to FIG. 2D are schematic structural diagrams of devices for testing performance of a radio network cell according to a second embodiment of the present invention.

### DETAILED DESCRIPTION OF THE EMBODIMENTS

To make the objectives, technical solutions, and advantages of the present invention clearer, the embodiments of the present invention are described in detail below with reference to the accompanying drawings. It should be noted that the exemplary embodiments are merely for illustrating the present invention, rather than limiting the present invention.

### Embodiment 1

This embodiment provides a method for testing performance of a radio network cell. The method is described hereunder with reference to the accompanying drawings.

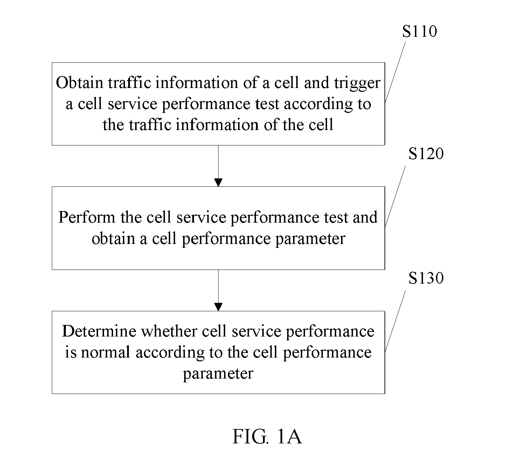

FIG. 1A is a flowchart of a method for testing performance of a radio network cell according to the present invention. The method includes:
Step S 110: Obtain traffic information of a cell and trigger a cell service performance test according to the traffic information of the cell.

In this embodiment, this step is performed by a test device. The test device is automatically or manually triggered to interact with one or more of a radio base station, a radio base station controller, and a radio network management system to obtain the traffic information of the cell. Specifically, the test device interacts with a "control plane processing subsystem", a "user plane processing subsystem", and a "performance management subsystem" of the radio base station, a "control plane processing subsystem", a "user plane processing subsystem", and a "performance management subsystem" of the radio base station controller, and a "performance management subsystem" of the radio network management system. The traffic information of the cell includes traffic of the cell within a latest predetermined period of time, instant traffic of the cell, sum of the uplink and downlink data traffic, and/or the maximum number of users that are online concurrently (that is, one or any combination of the traffic of the cell within a latest predetermined period of time, the instant traffic of the cell, the sum of the uplink and downlink data traffic, and the maximum number of users that are online concurrently). Correspondingly, the step of triggering a cell service performance test according to the traffic information of the cell is specifically as follows: When the traffic of the cell within the latest predetermined period of time is lower than a predetermined traffic value, for example, the maximum number of users that are online concurrently in the cell within the latest hour is smaller than 5, or a peak value of the sum of the uplink and downlink data traffic of the cell within the latest hour is smaller than 1 Mbps, or when the instant traffic of the cell is zero, the cell service performance test is triggered.

Step S120: Perform the cell service performance test and obtain a cell performance parameter (that is, a result of the cell service performance test).

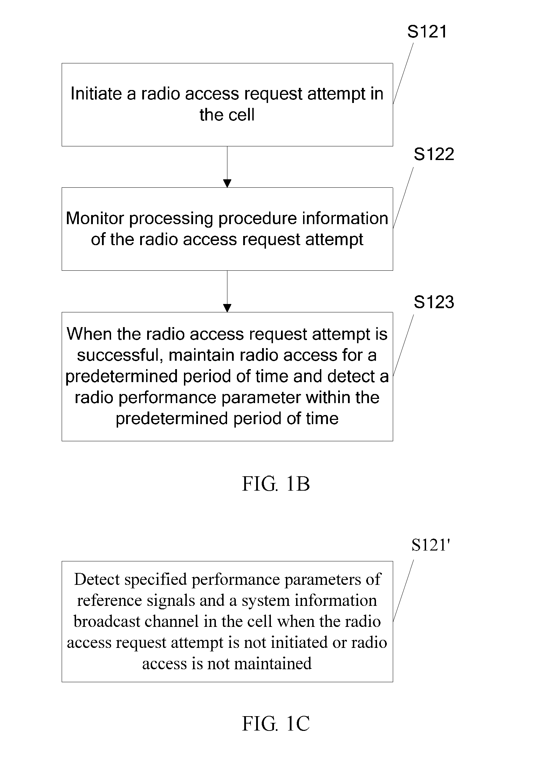

In this step, according to trigger information of the cell service performance test, the test device performs the cell performance test and obtains the cell performance parameter. This step may specifically adopt one of the following two manners, as shown in FIG. 1B and FIG. 1C respectively.

As shown in FIG. 1B, step S120 specifically includes:
Step S121: Initiate a radio access request attempt in the cell, where the radio access request is the same as an access request initiated by a commonly used mobile terminal such as a mobile phone and different networks perform the initiation according to different standard procedures.
Step S122: Monitor processing procedure information of the radio access request attempt, for example, the times that the radio access request attempt fails to be normally processed within a predetermined period of time.
Step S123: When the radio access request attempt is successful, maintain radio access for a predetermined period of time, for example, 5 minutes, and detect a radio performance parameter (that is, a radio performance test parameter) within the predetermined period of time, for example, signal strength, a signal to noise ratio, and a bit error ratio.

As shown in FIG. 1C, step S120 may further specifically includes:
Step S121': Detect specific performance parameters of reference signals and a system information broadcast channel in the cell when the radio access request attempt is not initiated or radio access is not maintained.

A specified performance parameter in this embodiment of the present invention may include any one or a combination of the signal strength and the bit error ratio.
Step S130: Determine whether cell service performance is normal according to the cell performance parameter.

In this step, the test device needs to determine whether the cell service performance is normal according to the obtained cell performance parameter. Specifically, when the processing procedure information of the radio access request attempt is that the number of times that the radio access request attempt fails to be normally processed within the predetermined period of time exceeds a threshold, for example, a total of 10 attempts are initiation, among which 6 attempts fail, or when a difference between the radio performance parameter and a predetermined value exceeds a threshold, for example, received signal strength is lower than 5 dBm, or when a difference between the specified performance parameter and a predetermined value exceeds a threshold, for example, the bit error ratio is over 30%, it is determined that the cell service performance is abnormal.

In this embodiment, an execution unit is, but not limited to, a test device. That is, the execution unit may also be another entity having a similar function. In addition, the test device may be a functional module disposed at the radio base station or may be a terminal device disposed independently.

According to this embodiment, the radio performance parameter of the cell and the processing procedure information in the procedure of the radio access request attempt are detected. This improves the accuracy of analysis and determination of the cell service performance. In addition, a test is able to be performed without depending on a mobile terminal in an actual radio network, and test data is able to be obtained.

### Embodiment 2

This embodiment provides a device for testing performance of a radio network cell. The device for testing performance of a radio network cell is described in detail below with reference to the accompanying drawings.

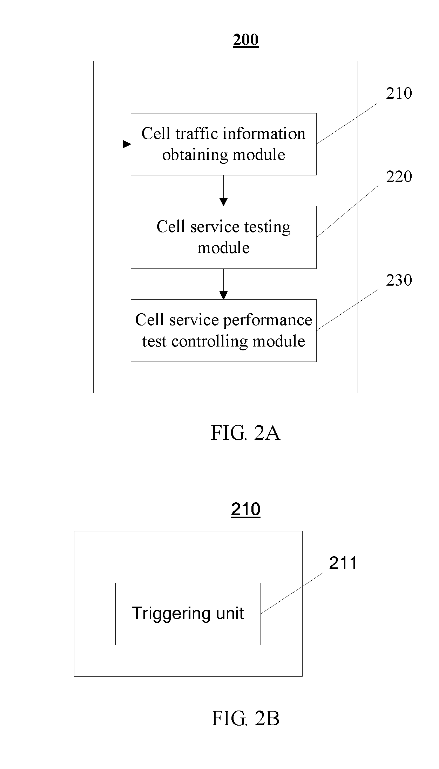

FIG. 2A is a schematic structural diagram of a device 200 for testing performance of a radio network cell according to the present invention. The device includes:
a cell traffic information obtaining module 210, configured to obtain traffic information of a cell and trigger a cell service performance test according to the traffic information of the cell;
a cell service testing module 220, configured to perform the cell service performance test and obtain a cell performance parameter; and
a cell service performance test controlling module 230, configured to determine whether cell service performance is normal according to the cell performance parameter.

The cell traffic information obtaining module 210 interacts with one or more of a radio base station, a radio base station controller, and a radio network management system to obtain the traffic information of the cell. Specific interaction units includes: a "control plane processing subsystem", a "user plane processing subsystem", and a "performance management subsystem" of the radio base station, a "control plane processing subsystem", a "user plane processing subsystem", and a "performance management subsystem" of the radio base station controller, and a "performance management subsystem" of the radio network management system. The cell traffic information obtaining module 210, the cell service testing module 220, and the cell service performance test controlling module 230 may be disposed in a same cabinet of the radio base station together with a subsystem of the radio base station, or disposed as independent entities. After being disposed as an independent entity, the cell service testing module 220 may be placed in an expected service area of the tested cell.

The traffic information of the cell includes traffic of the cell within a latest predetermined period of time, instant traffic of the cell, sum of the uplink and downlink data traffic, and/or the maximum number of users that are online concurrently (that is, one or any combination of the traffic of the cell within a latest predetermined period of time, the instant traffic of the cell, the sum of the uplink and downlink data traffic, and the maximum number of users that are online concurrently). As shown in FIG. 2B, the cell traffic information obtaining module 210 further includes:
a triggering unit 211, configured to trigger the cell service performance test when the traffic of the cell within the latest predetermined period of time is lower than a predetermined traffic value or when the instant traffic of the cell is zero.

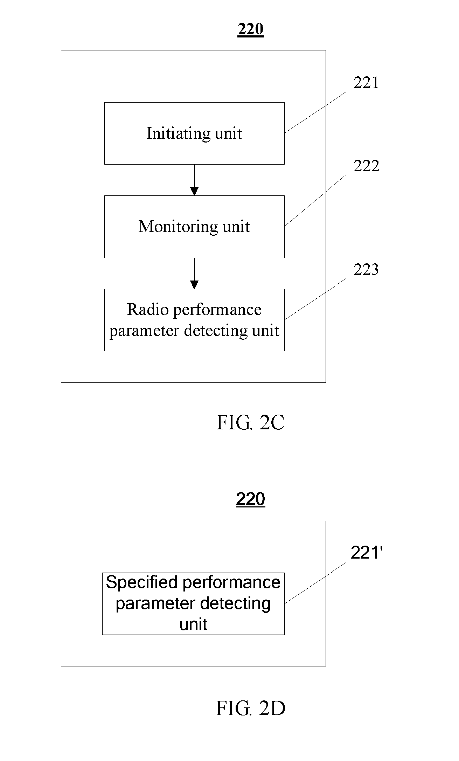

As shown in FIG. 2C, the cell service testing module 220 may further include:
an initiating unit 221, configured to initiate a radio access request attempt in the cell;
a monitoring unit 222, configured to monitor processing procedure information of the radio access request attempt; and
a radio performance parameter detecting unit 223, configured to maintain radio access for a predetermined period of time when the radio access request attempt is successful and detect a radio performance parameter within the predetermined period of time.

The cell service performance test controlling module 230 determines that the cell service performance is abnormal when the processing procedure information of the radio access request attempt is that the number of times that the radio access request attempt fails to be normally processed within the predetermined period of time exceeds a threshold or a difference between the radio performance parameter and a predetermined value exceeds a threshold.

As shown in FIG. 2D, the cell service testing module 220 may further include:
a specified performance parameter detecting unit 221', configured to detect specified performance parameters of reference signals and a system information broadcast channel in the cell when the radio access request attempt is not initiated or radio access is not maintained.

The cell service performance test controlling module 230 determines that the cell service performance is abnormal when a difference between a specified performance parameter and a predetermined value reaches a threshold.

According to this embodiment, the radio performance parameter of the cell and the processing procedure information in the procedure of the radio access request attempt are detected. This improves the accuracy of analysis and determination of the cell service performance. In addition, a test is able to be performed without depending on a mobile terminal in an actual radio network, and the test data is able to be obtained.

The preceding embodiments describe in detail the objectives, technical solutions, and beneficial effects of the present invention. It should be understood that these embodiments are illustrative only, but the protection scope of the present invention is not limited thereto. Any modification, equivalent replacement, and improvement made without departing from the principle of the present invention shall fall within the protection scope of the present invention.

## Claims

1. A method for testing performance of a radio network cell, comprising:
obtaining traffic information of a cell and triggering a cell service performance test according to the traffic information of the cell;
performing the cell service performance test and obtaining a cell performance parameter; and
determining whether cell service performance is normal according to the cell performance parameter.

2. The method according to claim 1, wherein the step of obtaining traffic information of a cell specifically comprises: interacting with at least one of a radio base station, a radio base station controller, and a radio network management system to obtain the traffic information of the cell.

3. The method according to claim 1 or 2, wherein the traffic information of the cell comprises traffic of the cell within a latest predetermined period of time or instant traffic of the cell; and the step of triggering a cell service performance test according to the traffic information of the cell specifically comprises:
triggering the cell service performance test when the traffic of the cell within the latest predetermined period of time is lower than a predetermined traffic value or the instant traffic of the cell is zero.

4. The method according to any one of claims 1-3, wherein the step of performing the cell service performance test and obtaining a cell performance parameter specifically comprise:
initiating a radio access request attempt in the cell;
monitoring processing procedure information of the radio access request attempt; and
when the radio access request attempt is successful, maintaining radio access for a predetermined period of time and detecting a radio performance parameter within the predetermined period of time.

5. The method according to claim 4, wherein the step of determining whether cell service performance is normal according to the cell performance parameter specifically comprises:
determining that the cell service performance is abnormal when the processing procedure information obtained through the monitoring, of the radio access request attempt is that the number of times that the radio access request attempt fails to be normally processed within the predetermined period of time exceeds a threshold; or
determining that the cell service performance is abnormal when the processing procedure information, obtained through the monitoring, of the radio access request attempt is that a difference between the radio performance parameter and a predetermined value exceeds a threshold.

6. The method according to any one of claims 1-3, wherein the step of performing the cell service performance test and obtaining a cell performance parameter specifically comprise:
detecting specified performance parameters of reference signals and a system information broadcast channel in the cell when the radio access request attempt is not initiated or radio access is not maintained; and
the determining whether cell service performance is normal according to the cell performance parameter specifically comprises:
determining whether the cell service performance is normal according to the specified performance parameter.

7. A device, comprising:
a cell traffic information obtaining module, configured to obtain traffic information of a cell and trigger a cell service testing module to perform a cell service performance test according to the traffic information of the cell;
the cell service testing module, configured to perform the cell service performance test and
obtain a cell performance parameter; and
a cell service performance test controlling module, configured to determine whether cell service performance is normal according to the cell performance parameter obtained by the cell service testing module.

8. The device according to claim 7, wherein the traffic information of the cell comprises traffic of the cell within a latest predetermined period of time or instant traffic of the cell; and the cell traffic information obtaining module specifically comprises:
a triggering unit, configured to trigger the cell service performance test when the traffic of the cell within the latest predetermined period of time is lower than a predetermined traffic value or the instant traffic of the cell is zero.

9. The device according to claim 7 or 8, wherein the cell service testing module comprises:
an initiating unit, configured to initiate a radio access request attempt in the cell;
a monitoring unit, configured to monitor processing procedure information of the radio access request attempt; and
a radio performance parameter detecting unit, configured to maintain radio access for a predetermined period of time when the radio access request attempt is successful and detect a radio performance parameter within the predetermined period of time;
wherein the cell service performance test controlling module is further configured to determine that the cell service performance is abnormal when the processing procedure information of the radio access request attempt is that the number of times that the radio access request attempt fails to be normally processed within the predetermined period of time exceeds a threshold or a difference between the radio performance parameter and a predetermined value exceeds a threshold.

10. The device according to claim 7 or 8, wherein the cell service testing module specifically comprises:
a specified performance parameter detecting unit, configured to detect specified performance parameters of reference signals and a system information broadcast channel in the cell when the radio access request attempt is not initiated or radio access is not maintained;
wherein the cell service performance test controlling module is further configured to determine that the cell service performance is abnormal when a difference between a specified performance parameter and a predetermined value exceeds a threshold.

11. A mobile terminal, comprising the device according to any one of claims 7-10.
